Europäisches Patentamt

European Patent Office

Office européen des brevets

(19)

(11) Publication number: **0 264 188 B1**

(12) # EUROPEAN PATENT SPECIFICATION

(45) Date of publication of patent specification: **15.04.92**  (51) Int. Cl.5: **H04M 9/08**, H04M 11/04

(21) Application number: **87307946.1**

(22) Date of filing: **09.09.87**

(54) **Improvements in call devices.**

(30) Priority: **10.09.86 GB 8621758**

(43) Date of publication of application:
**20.04.88 Bulletin 88/16**

(45) Publication of the grant of the patent:
**15.04.92 Bulletin 92/16**

(84) Designated Contracting States:
**AT BE DE FR GB NL SE**

(56) References cited:
EP-A- 0 075 076          FR-A- 1 588 395
FR-A- 2 408 249          FR-A- 2 461 412
FR-A- 2 527 403          US-A- 4 012 603
US-A- 4 507 524

SIEMENS FORSCHUNGS- UND ENTWICKLUN-
GSBERICHTE, vol. 4, no. 3, 1975, pages
127-131, Springer-Verlag, Berlin, DE; H.
HÖGE: "Analysis of an adaptive echo cancel-
ler with optimized gradient gain"

(73) Proprietor: **CASS GROUP PUBLIC LIMITED
COMPANY
Delta Way Thorpe Industrial Estate
Egham Surrey TW20 8RN(GB)**

(72) Inventor: **Atamian, Hagop
27 Eastfield Crescent
Yardley Gobion Northamptonshire NN12
7TT(GB)**

(74) Representative: **Loughrey, Richard Vivian Pat-
rick et al
HUGHES CLARK & CO 114-118 Southampton
Row
London WC1B 5AA(GB)**

## Description

This invention relates to call devices intended for use by elderly individuals living alone and for use in situations where a received signal is required to provide a relatively high amplitude sound signal. Such devices may use a switched telephone network or a network of private circuits as a transmission medium. In particular the invention relates to switching circuits for use in such call devices.

Call devices for connection in parallel with a telephone to a switched telephone network and activated in response to a signal from a small radio transmitter carried by an elderly individual are known from Patent Specification Nos GB-A-2166321 and 2051520 and Butler, "Alarms that reassure", Health and Social Service Journal, 17 June 1982, 734-736. When such a call device receives an incoming signal from the transmitter, it automatically dials a number previously entered into memory, transmits encoded identity information to the selected destination so that a person at that destination is made aware via a decoder from which telephone the call has come, and thereafter establishes two-way handsfree speech transmission so that the person at the destination can determine the reason for the call.

A problem that arises with such a call device is how to establish effective handsfree speech transmission between the elderly individual and the person at the destination. In an emergency situation, a system including a voice switching unit controlled via a "transmit" button gives a person at the destination the power to talk at will to the individual who made the call to determine the nature of the difficulty and to provide reassurance. But care is required to operate the transmit button to make meaningful two-way conversation possible, and the need to give such care to a mechanical task in an emergency situation is undesirable. Furthermore, the person at the destination may be confronted with a dual task, firstly talking via a call unit with the affected individual to obtain information and provide reassurance and secondly locating and instructing a third party via an alternative communications system or medium. The need to operate the transmit button as well as these other tasks is an unacceptable intrusion.

Handsfree telephone communication is known in an office environment via a voice switching unit that changes between transmit and receive states depending upon the relative magnitudes of the transmitted and received signals as described in Patent specification GB 2122454B. The switching unit rectifies and integrates signals present in the send and receive channels and applies the integrated signals as inputs to a differential amplifier which outputs a control signal to control the gain of variable gain amplifiers in the send and receive channels. Such a switching unit would not be acceptable for use in a call device because its changeover from send to receive depends upon the relative magnitudes of the microphone signal, ambient noise as from a radio or television or sound from the individual concerned on the one hand and the incoming signal on the other hand. High amplitude local noise may maintain the unit in the transmit state, blocking reception of speech from the person at the destination. In use of the call device by persons, such as elderly individuals, who are partially deaf and in use of the call device in high ambient noise locations there is a need for received sound signals to be generated by a loud speaker at a relatively high amplitude in order that they can be heard by the user. Also, the user may be at a distance from the call unit so that the microphone and send channel need to be sensitive to low amplitude sound signals. As a result a voice switching circuit which is responsive to relative magnitudes of the send and receive signals would tend to switch to the send channel in response to any high amplitude sound emanating from the loud speaker in response to a received signal.

According to one aspect of this invention a switch circuit for a call device including a send channel; a receive channel; a connection circuit for connecting said send and receive channels to a transmission line for transmission of speech signals from said send channel to the transmission line and for reception of speech signals in said receive channel from the transmission line; first means operable to control passage of speech signals in the send channel; second means operable to control passage of speech signals in the receive channel; and control means to operate the first means and second means to control passage of speech signals in the send and receive channels; is characterised in that in a normal state the control means maintains the first means in a first state permitting passage of speech signals in the send channel to the connection circuit and maintains the second means in a second state inhibiting passage of speech signals in the receive channel from the connection circuit; in that the control means includes a first circuit to generate a control signal having a magnitude dependent upon the magnitude of speech signals received in the receive channel from the transmission line and a second circuit comprising a comparator to compare the magnitude of the control signal with a reference potential and in that the second circuit in response to the control signal exceeding the reference potential operates the first means to inhibit passage of speech signals in the send channel and operates the second means to permit passage of speech signals in the receive channel.

According to another aspect of the invention a switch circuit for a call device including a send channel; a receive channel; a hybrid circuit for connecting said send and receive channels to a transmission line, leakage in the hybrid resulting in a leakage signal appearing in the receive channel when a send signal is present in the send channel; first switch means in the send channel; second switch means in the receive channel; first means to rectify and integrate the send signal to produce a first signal of first polarity; second means to derive a second signal from signals present in the receive channel; and control means responsive to the first and second signals to control switching of the send switch and receive switch is characterised in that the second means derives the second signal to be of first and second opposite polarities and in that the control means includes rectifier means receiving a combination of the first and second signals, the rectifier means being responsive to signals of the combination having the second polarity to generate a control signal to control operation of the send switch and receive switch.

According to a further aspect of the invention a call device including a microphone, a loudspeaker and a switch circuit for connecting the microphone and loudspeaker to a transmission line is characterised in that the switch circuit is as hereinbefore defined.

An embodiment of the invention will now be described, by way of example only, with reference to the accompanying drawings in which:-

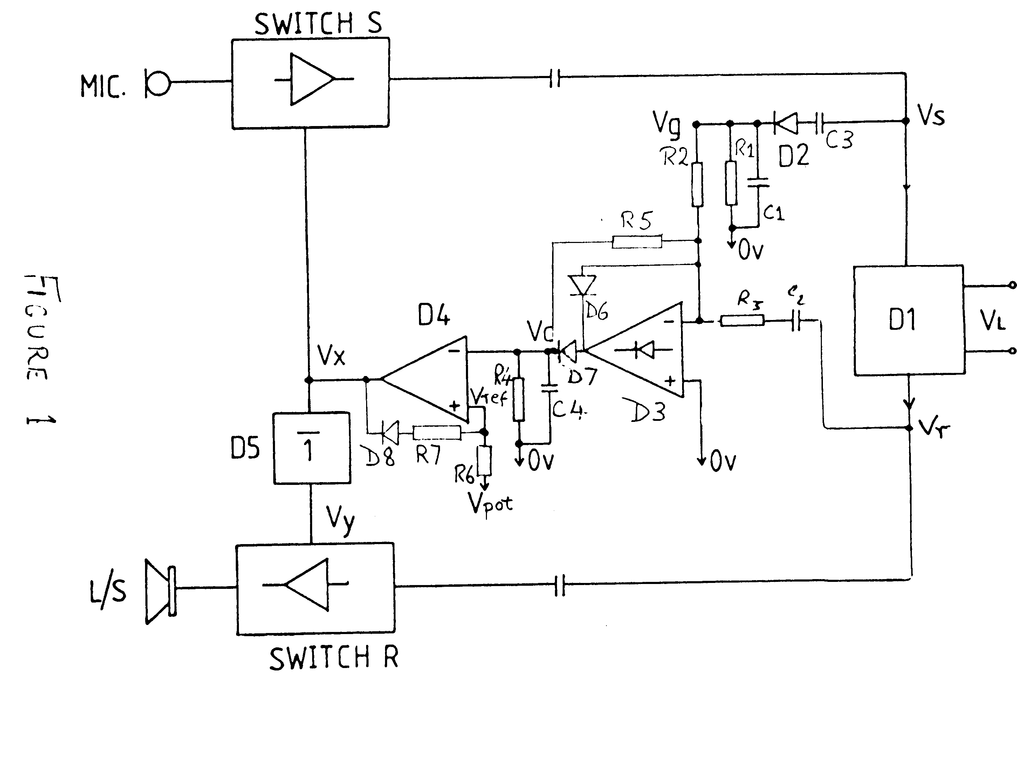

Figure 1 is a block diagram of a voice switching circuit and

Figure 2 shows waveforms occurring in the operation of the switching circuit.

In the drawing, a hybrid circuit D1 transmits or receives an AC signal VL depending upon the states of send and receive switches S and R connected respectively to a microphone MIC and a loudspeaker L/S. Switches S and R are identical and are voltage controlled amplifiers whose gain depends on control voltages Vx and Vy respectively. The control line for switch S is connected directly and the control line for switch R is connected through inverter D5 to a common control voltage Vx so that the switch S is at maximum gain and the switch R is at minimum gain when the control voltage Vx is high (Vy low) and the switch S is at minimum gain and the switch R is at maximum gain when the control voltage Vx is low (Vy high). Thus when one switch has high gain the other switch has low gain and vice versa. The switch block S includes a pre-amplifier with automatic gain control, a send switch and an amplifier with filtering to transmit allowed speech band frequencies. The switch block R includes an audio amplifier to drive the loudspeaker.

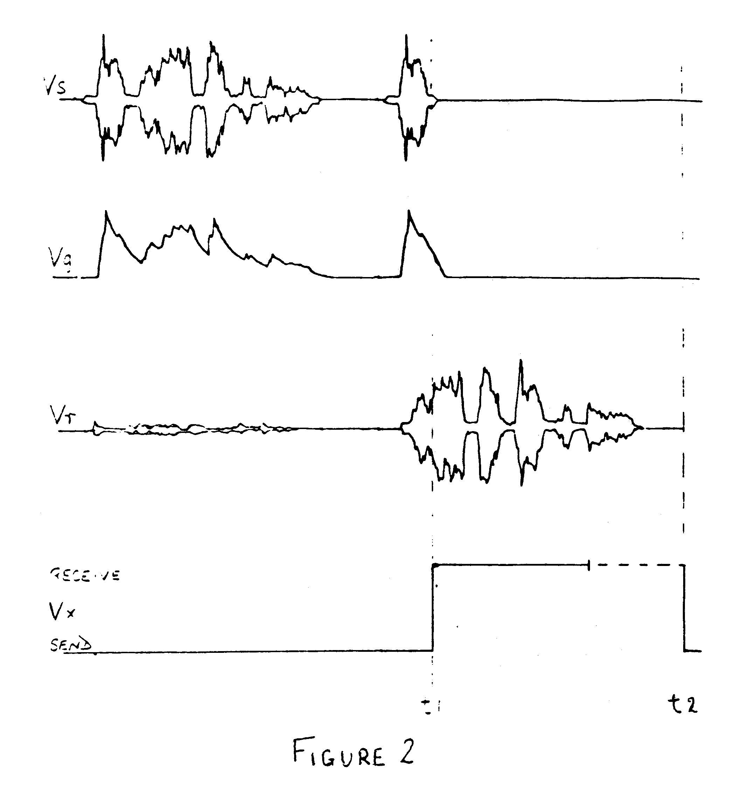

A signal Vs (the envelope of which is shown in figure 2) from the microphone MIC and amplified by the switch S is fed via a coupling capacitor C3 to rectifier D2 whose output is fed to an integrating and smoothing network R1, C1 connected between the rectifier D2 and zero volts as shown. The resulting signal Vg (shown in Figure 2) is fed via scaling resistor R2 to an inverting input of an operational amplifier D3 configured as a precise positive rectifier by means of feedback paths provided by D6 and by R5, D7. A signal Vr on the receive side of the hybrid circuit D1 is fed via coupling capacitor C2 and scaling resistor R3 to the inverting input of D3. In the send mode the signal Vr is that due to leakage across the hybrid circuit D1 and thus is an attenuated signal Vs. In the receive mode the signal Vr is the signal VI received from the line. The non-inverting input of D3 is connected to zero volts so that the amplifier D3 is not responsive to positive signals on its inverting input. The values of scaling resistors R2 and R3 are selected so that the signal Vg substantially cancels the negative component of the leakage signal Vr. The result is that the DC output voltage Vc of operational amplifier D3 is substantially zero in the send mode but is proportional to Vr in the receive mode. The voltage Vc is integrated by a resistor capacitor network R4, C4 connected between the output of operational amplifier D3 and zero volts. The time constant of R4, C4 is at least 300 ms and preferably about 1 second. The time constant of network R4, C4 governs the time taken to switch from receive to send mode and should be sufficiently long to integrate the peaks of speech but short enough t o be unobtrusive. Switching from send to receive is fast, being approximately 10 ms.

The integrated voltage from network R4, C4 is fed to an inverting input of comparator D4 whose non-inverting input is connected to a reference voltage Vref. The state of comparator D4 determines the level of the control voltage Vx. The reference voltage Vref is maintained at a constant level such that in a quiescent state, when Vc is substantially zero, the voltage Vx will maintain switch S at high gain and switch R at low gain.

In the send mode signals from the microphone MIC are amplified and sent to line via the 2-4 wire hybrid circuit D1. Whilst sending to line, a small proportion of the send signal Vs leaks to the receive side of the hybrid D1 and appears as a signal Vr received from line. To prevent this from interfering with the channel switch control signal Vx, Vs is rectified at D2, and the positive DC voltage Vg is fed to the summing input of D3 to cancel out the negative portion of the hybrid leakage signal Vr. The control voltage Vc will therefore be kept at zero volts during sending.

When the amplitude of the signal Vr, received from line V1, exceeds the instantaneous magnitude of signal Vg, as shown at time t1 in Figure 2, the output Vc of operational amplifier D3 rises so that the control signal Vx output from operational amplifier D4 switches to a low value. With Vx at a low value, the switch S has low gain and switch R has high gain. While the capacitor C4 is maintained charged to a voltage Vc above the level of the reference voltage Vref by the received signal Vr the circuit is held in the receive mode. Any received signal from the line therefore overides any effect of a signal resulting from sounds picked up by the microphone. Under normal operating conditions, therefore, background noise at the microphone will not interfere with the switch control. The time constant of the resistor capacitor network R4, C4 is sufficiently long as to maintain the level of voltage Vc for short periods between successive burst of speech signal Vr. However when the amplitude of the received signal Vr falls to a relatively low level for a period of time sufficient to allow the charge on C4 to leak away so that the voltage Vc falls below the reference voltage Vref, the control signal Vx switches back to its quiescent state as shown at time t2 in Figure 2.

The reference voltage Vref is derived from a steady potential source Vpot via resistor R6. A feedback path is provided from the output of amplifier D4 through diode D8 and resistor R7 to the non-inverting input of the amplifier. During the quiescent state when the circuit is in the send mode, control signal Vx is low and the reference voltage Vref is equal to the potential Vpot. However when the switching circuit is operated in response to a received signal Vr, Vx is high and the feedback from the output of amplifier D4 has the effect of decreasing the reference voltage Vref. This ensures that when the switching circuit has been switched by a received signal Vr of sufficient amplitude, as determined by the quiescent magnitude of Vref, the circuit remains in the receive mode provided the receive signal is of sufficient amplitude as determined by the decreased value of Vref. As a result the circuit remains in the receive mode even when the amplitude of the receive signal Vr falls below the amplitude necessary to switch the circuit initially from the send to receive mode. When the amplitude of receive signal Vr falls such that voltage Vc is less than the decreased magnitude of Vref, Vx goes low and reference voltage Vref returns to its quiescent value equal to Vpot.

It will be appreciated that sounds emanating from the loudspeaker LS will be received by the microphone MIC. However these sounds and any others to which the microphone responds cannot cause switching of the circuit. Therefore the output of the loudspeaker may be as loud as is necessary to enable a partially deaf person to hear received speech. Also the microphone and the send channel may be made to have as high a sensitivity as is necessary to allow a person to speak at a distance from the call device. By providing automatic gain control in the send switch S, the amplitude of the signal Vs can be substantially independent of the amplitude of sound picked up by the microphone. Substantial cancellation of the effect of the leakage signal Vr by the signal Vg permits the switch control circuit to be arranged to be relatively sensitive to received signals so that switching from send to receive can be effected by relatively weak signals Vr.

Various modifications may be made to the embodiment described without departing from the invention, the scope of which is defined in the appended claims. For example, nurse call equipment may be provided in which calls may be made from a handset at a central nursing station to, for example, 4 to 30 beds via a destination selector and non-switched voice network, a nurse at the central station being heard by the patient irrespective of the noise level around the patient's bed. Similar communication may be provided between a hotel reception point and call units in the hotel bedrooms.

## Claims

1. A switch circuit for a call device including:-
   a send channel;
   a receive channel;
   a connection circuit (D1) for connecting said send and receive channels to a transmission line for transmission of speech signals from said send channel to the transmission line and for reception of speech signals in said receive channel from the transmission line;
   first means (S) operable to control passage of speech signals in the send channel;
   second means (R) operable to control passage of speech signals in the receive channel;
   and control means (D3, D4) to operate the first means (S) and second means (R) to control passage of speech signals in the send and receive channels;
   characterised in that
   in a normal state the control means (D3, D4) maintains the first means (S) in a first state permitting passage of speech signals in the send channel to the connection circuit (D1) and maintains the second means (R) in a second state inhibiting passage of speech signals in the receive channel from the connection circuit (D1); in that
   the control means includes a first circuit (D3) to generate a control signal (Vc) having a magnitude dependent upon the magnitude of speech signals (Vr) received in the receive channel from the transmission line and a second circuit comprising a comparator (D4) to compare the magnitude of the control signal (Vc) with a reference potential (Vref) and in that the second circuit (D4) in response to the control signal exceeding the reference potential operates the first means (S) to inhibit passage of speech signals in the send channel and operates the second means (R) to permit passage of speech signals in the receive channel.

2. A switch circuit as claimed in claim 1 further characterised in that the first circuit (D3) includes a network (R4,C4) to integrate the control signal, the network (R4,C4) having a time constant at least as long as the period between successive peaks of received speech signals whereby the switch circuit inhibits the send channel and enables the receive channel for the duration of the period between successive peaks of speech signals.

3. A switch circuit as claimed in claim 1 or 2 further characterised in that the second circuit includes reference potential setting means (D4, D8,R7,R6, Vpot) to set the reference potential to a first value and in response to the control signal exceeding the first value to set the reference potential (Vref) to a second value lower than the first value.

4. A switch circuit as claimed in any preceding claim further characterised in that the connection circuit (D1) is a hybrid circuit in which speech signals from the send channel result in the presence of leakage signals in the receive channel; in that the first circuit includes a network (C3,D2,R1,C1) to derive an integrated signal (Vg) from speech signals in the send channel; and scaling means (R2, R3) to sum the integrated signal and signals (Vr) from the receive channel so as to effect cancellation of the leakage signals whereby the magnitude of the control signal (Vc) is dependent upon the magnitude of speech signals received in the receive channel from the transmission line and is independent of the magnitude of leakage signals.

5. A switch circuit as claimed in claim 4 further characterised in that leakage and speech signals in the receive channel are each of first and second opposite polarities; that the integrated signal (Vg) is of first polarity and in that the first control circuit includes a rectifier (D3) with an input connected to the scaling means (R2,R3), the rectifier being not responsive to signals of first polarity at the input.

6. A switch circuit for a call device including a send channel; a receive channel; a hybrid circuit (D1) for connecting said send and receive channels to a transmission line, leakage in the hybrid resulting in a leakage signal appearing in the receive channel when a send signal (Vs) is present in the send channel; first switch means (S) in the send channel; second switch means (R) in the receive channel; first means (D2, R1, C1, R2) to rectify and integrate the send signal to produce a first signal (Vg) of first polarity; second means (R3, C2) to derive a second signal from signals present in the receive channel; and control means (D3, D4, R4, C4) responsive to the first and second signals to control switching of the send switch (S) and receive switch (R) characterised in that the second means (R3, C2) derives the second signal to be of first and second opposite polarities and in that the control means includes rectifier means (D3, D6, D7, R5) receiving a combination of the first and second signals, the rectifier means being responsive to signals of the combination having the second polarity to generate a control signal (Vc) to control operation of the switch (S) and switch (R).

7. A switch circuit as claimed in claim 6 further characterised in that the rectifier means (D3, D6, D7, R5) includes an operational amplifier (D3) configured as a precision rectifier; said operational amplifier (D3) having first and second inputs, said first input being held at a fixed potential and said second input being connected to sum the first and second signals.

8. A switch circuit as claimed in claim 6 or 7 further characterised in that the control means (D3, D4, R4, C4) includes a comparator (D4) to enable the switch (R) of the receive channel and to disable the switch (S) of the send channel in response to the control signal (Vc) having magnitude greater than a predetermined reference level (Vref).

9. A call device including a microphone (MIC), a loudspeaker (L/S) and a switch circuit for connecting the microphone and loudspeaker to a transmission line characterised in that the switch circuit is as claimed in any preceding claim.

**Revendications**

1. Circuit d'interrupteur pour un dispositif d'alarme vocale comprenant :
un canal d'émission;
un canal de réception;
un circuit de connexion (D1) pour connecter lesdits canaux d'émission et de réception à une ligne de transmission pour la transmission de signaux vocaux envoyés dudit canal d'émission à ladite ligne de transmission et pour la réception de signaux vocaux envoyés par la ligne de transmission dans ledit canal de réception;
des premiers moyens (S) utilisables pour la commande du passage de signaux vocaux dans le canal d'émission;
des deuxièmes moyens (R) utilisables pour la commande du passage de signaux vocaux dans le canal de réception;
et des moyens de commande (D3, D4) servant à activer les premiers moyens (S) et les deuxièmes moyens (R) pour la commande du passage de signaux vocaux dans les canaux d'émission et de réception; caractérisé en ce que :
dans un état normal, les moyens de commande (D3, (D4) maintiennent les premiers moyens (S) dans un premier état dans lequel ils permettent le passage de signaux vocaux dans le canal d'émission jusqu'au circuit de connexion (D1) et maintiennent les deuxièmes moyens (R) dans un deuxième état dans lequel ils interdisent le passage de signaux vocaux provenant du circuit de connexion (D1) dans le canal de réception; en ce que les moyens de commande comportent un premier circuit (D3) pour produire un signal de commande (Vc) dont l'amplitude dépend de l'amplitude des signaux vocaux (Vr) reçus dans le canal de réception depuis la ligne de transmission et un deuxième circuit comportant un comparateur (D4) pour comparer l'amplitude du signal de commande (Vc) avec un potentiel de référence (Vréf) et en ce que, si l'amplitude du signal de commande excède celle du potentiel de référence, le deuxième circuit (D4) active les premiers moyens (S) pour empêcher le passage de signaux vocaux dans le canal d'émission et active les deuxièmes moyens (R) pour autoriser le passage de signaux vocaux dans le canal de réception.

2. Circuit d'interrupteur selon la revendication 1, caractérisé en outre en ce que le premier circuit (D3) comporte un réseau (R4, C4) pour intégrer le signal de commande, le réseau (R4, C4) ayant une constante de temps au moins aussi longue que la période de temps s'écoulant entre des pics successifs de signaux vocaux reçus, ce qui permet au circuit d'interrupteur de bloquer le canal d'émission et d'activer le canal de réception pendant la durée de la période de temps s'écoulant entre des pics successifs de signaux vocaux.

3. Circuit d'Interrupteur selon la revendication 1 ou 2, caractérisé en outre en ce que le deuxième circuit comporte des moyens de réglage du potentiel de référence (D4, D8, R7, R6, Vpot) pour régler le potentiel de référence sur une première valeur et, lorsque la valeur du signal de commande dépasse la première valeur, pour régler le potentiel de référence (Vréf) sur une deuxième valeur inférieure à la première valeur.

4. Circuit d'interrupteur selon l'une des revendications précédentes, caractérisé en outre en ce que le circuit de connexion (D1) est un circuit hybride dans lequel les signaux vocaux provenant du canal d'émission provoquent des signaux de fuite dans le canal de réception; en ce que le premier circuit comporte un réseau (C3, D2, R1, C1) pour dériver un signal intégré (Vg) à partir des signaux vocaux dans le canal d'émission, et des moyens de graduation (R2, R3) pour sommer le signal intégré et des signaux (Vr) provenant du canal de réception de manière à annuler les signaux de fuite, grâce à quoi l'amplitude du signal de commande (Vc) dépend de l'amplitude des signaux vocaux reçus depuis la ligne de transmission dans le canal de réception et ne dépend pas de l'amplitude des signaux de fuite.

5. Circuit d'interrupteur selon la revendication 4, caractérisé en outre en ce que les signaux de fuite et les signaux vocaux dans le canal de réception ont chacun une première et une deuxième polarités opposées; en ce que le signal intégré (Vg) a une première polarité et en ce que le premier circuit de commande comporte un redresseur (D3) avec une entrée connectée aux moyens de graduation (R2, R3), le redresseur ne réagissant pas aux signaux de la première polarité à son entrée.

6. Circuit d'interrupteur pour un dispositif d'alarme vocale comprenant un canal d'émission; un canal de réception; un circuit hybride (D1) pour connecter lesdits canaux d'émission et de réception à une ligne de transmission, une fuite du circuit hybride provoquant l'apparition d'un signal de fuite dans le canal de réception lorsqu'un signal émis (Vs) se trouve dans le canal d'émission;

des premiers moyens interrupteurs (S) dans le canal d'émission; des deuxièmes moyens interrupteurs (R) dans le canal de réception;

des premiers moyens (D2, R1, C1, R2) pour redresser et intégrer le signal émis afin de produire un premier signal (Vg) ayant une première polarité;

des deuxièmes moyens (R3, C2) pour dériver un deuxième signal à partir des signaux se trouvant dans le canal de réception; et

des moyens de commande (D3, D4, R4, C4) réagissant aux premier et deuxième signaux pour commander la commutation de l'interrupteur d'émission (S) et de l'interrupteur de réception (R);

ledit circuit étant caractérisé en ce que les deuxièmes moyens (R3, C2) dérivent le deuxième signal de telle sorte que ce dernier aura une première et une deuxième polarités opposées et étant caractérisé en ce que les moyens de commande comportent des moyens redresseurs (D3, D6, D7, R5) recevant une combinaison des premier et deuxième signaux,les moyens redresseurs réagissant à des signaux de la combinaison qui présentent la deuxième polarité afin de produire un signal de commande (Vc) permettant de commander l'actionnement de l'interrupteur (S) et de l'interrupteur (R).

7. Circuit d'interrupteur selon la revendication 6, caractérisé en outre en ce que les moyens redresseurs (D3, D6, D7, R5) comportent un amplificateur opérationnel (D3) configuré en redresseur de précision; ledit amplificateur opérationnel (D3) ayant des première et deuxième entrées, ladite première entrée étant maintenue à un potentiel fixe et ladite deuxième entrée étant connectée pour sommer les premier et deuxième signaux.

8. Circuit d'interrupteur selon l'une des revendications 6 et 7, caractérisé en outre en ce que les moyens de commande (D3, D4, R4, C4) comportent un comparateur (D4) pour activer l'interrupteur (R) du canal de réception et désactiver l'interrupteur (S) du canal d'émission en réponse au signal de commande (Vc) lorsque ce dernier a, une amplitude supérieure à un niveau de référence prédéterminé (Vréf).

9. Dispositif d'alarme vocale comportant un microphone (MIC), un haut parleur (L/S) et un circuit d'interrupteur pour connecter le microphone et le haut-parleur à une ligne de transmission, ledit circuit d'interrupteur étant conforme à l'une des revendications précédentes.

**Patentansprüche**

1. Schalter-Stromkreis für eine Telefoneinrichtung mit einem Sendekanal; einem Empfangskanal; einem Verbindungsstromkreis (D1) zum Verbinden der Sende- und Empfangskanäle mit einer Übertragungslinie zur Übertragung von Sprechsignalen von Sendekanal zur Übertragungsiinie und zum Empfangen von Sprechsignalen in den Empfangskanai von der Übertragungslinie; mit ersten Mitteln (S) zum Steuern des Durchtritts der Sprechsignale in den Sendekanal, mit zweiten Mitteln (R) zum Steuern des Durchtritts der Sprechsignale in den Empfangskanal und mit Steuermitteln (D3, D4) zur Bedienung der ersten Mittel (S) und zweiten Mittel (R) zum Steuern des Durchtritts der Sprechsignale in den Sende- und Empfangskanälen,

dadurch gekennzeichnet,

daß im Nomalzustand die Steuermittel (D3, D4) die ersten Mittel (S) in einem ersten Zustand, der den Durchtritt von Sprechsignalen in den Sendekanal zum Verbindungsstromkreis (D1) erlaubt, und die zweiten Mittel (R) in einen zweiten Zustand halten, welcher den Durchgang von Sprechsignalen in den Empfangskanal von dem Verbindungsstromkreis (D1) verhindert, daß die Steuermittel einen ersten Stromkreis (D3) zur Erzeugung eines Steuersignals (Vc), welches eine Größe hat, die abhängt von der Größe der Sprechsignale (Vr), die im Empfangskanal von der Übertragungslinie empfangen werden, und einen zweiten Stromkreis einschließen, welcher einen Komparator (D4) zum Vergleich der Größe des Steuersignals (Vc) mit einem Referenzpotential (Vref) aufweist, und daß der zweite Stromkreis (D4) in Antwort auf ein das Referenzpotential übersteigendes Steuersignal die ersten Mittel (S) betätigt, um den Durchtritt von Sprechsignalen in den Sendekanal zu verhindern, und die zweiten Mittel (R) betätigt, um den Durchgang von Sprechsignalen in den Empfangskanal zu erlauben.

2. Schalterstromkreis nach Anspruch 1, dadurch gekennzeichnet, daß der erste Stromkreis (D3) ein Netzwerk (R4, C4) zum Integrieren des Steuersignals einschließt, wobei das Netzwerk (R4, C4) eine Zeitkonstante hat, die wenigstens so lang wie die Periode zwischen nachfolgenden Spitzenwerten der empfangenen Sprechsignale ist, wobei der Schalterstromkreis den Sendekanal sperrt und den Empfangskanal für die Periodendauer zwischen nachfolgenden Spitzenwerten der Sprechsignale aktiviert.

3.  Schalterstromkreis nach Anspruch 1 oder 2, dadurch gekennzeichnet, daß der zweite Stromkreis Referenzpotentialeinstellmittel (D4, D8, R7, R6, Vpot) zum Einstellen des Referenzpotentials auf einen ersten Wert und auf einen zweiten kleineren Wert einschließt, wenn das Steuersignal den ersten Wert zum Einstellen des Referenzpotentials (Vref) überschreitet.

4.  Schalterstromkreis nach einem der vorangehenden Ansprüche, dadurch gekennzeichnet, daß der Verbindungsstromkreis (D1) ein Hybridstromkreis ist, in welchem Sprechsignale vom Sendekanal in der Gegenwart von Streusignalen im Empfangskanal resultieren, daß der erste Stromkreis ein Netzwerk (C3, D2, R1, C1) zum Ableiten eines integrierten Signals (Vg) aus den Sprechsignalen in den Sendekanal einschließt, und daß Maßstabsmittel (R2, R3) vorgesehen sind, um das integrierte Signal und Signale (Vr) aus dem Empfangskanal zu summieren, um die Löschung der Streusignale zu bewirken, wobei die Größe des Steuersignals abhängig von der Größe der im Empfangskanal von der Übertragungslinie empfangenen Sprechsignale ist und unabhängig ist von der Größe der Streusignale.

5.  Schalterstromkreis nach Anspruch 4, dadurch gekennzeichnet, daß die Streu- und Sprechsignale im Empfangskanal jeweils von einer ersten und zweiten entgegengesetzten Polarität sind, daß das integrierte Signal (Vg) von einer ersten Polarität ist und daß der erste Steuerstromkreis einen Gleichrichter (D3) mit einem Eingang aufweist, der mit den Maßstabsmitteln (R2, R3) verbunden ist, wobei der Gleichrichter nicht auf Signale einer ersten Polarität am Eingang ansprechbar ist.

6.  Schalterstromkreis für eine Telefoneinrichtung mit einem Sendekanal, einem Empfangskanal, einem Hybridschaltkreis (D1) zum Verbinden der Sende- und Empfangskanäle mit einer Übertragungslinie, wobei eine Streuung im Hybrid in einem Streusignal resultiert, das im Empfangskanal erscheint, wenn ein Sendesignal (Vs) im Sendekanal gegenwärtig ist, mit ersten Schaltermitteln (S) im Sendekanal, mit zweiten Schaltermitteln (R) im Empfangskanal, mit ersten Mitteln (D2, R1, C1, R2) zum Gleichrichten und Integrieren des Sendesignals zum Erstellen eines ersten Signals (Vg) einer ersten Polarität, mit zweiten Mitteln (R3, C2) zum Ableiten eines zweiten Signals der im Empfangskanal gegenwärtigen Signale und mit Steuermitteln (D3, D4, R4, C4), die auf die ersten und zweiten Signale zum Steuern des Schaltens des Sendeschalters (S) und Empfangsschalters (R) ansprechbar sind, dadurch gekennzeichnet, daß die zweiten Mittel (R3, C2) das erste Signal ableiten, um von einer ersten und zweiten entgegengesetzten Polarität zu sein, und daß die Steuermittel Gleichrichtermittel (D3, D6, D7, R5) einschließen, welche eine Kombination der ersten und zweiten Signale empfangen, wobei die Gleichrichtermittel auf Signale einer Kombination ansprechen, die die zweite Polarität zur Erzeugung eines Steuersignals (Vc) zum Steuern der Betätigung des Schalters (S) und des Schalters (R) aufweisen.

7.  Schalterstromkreis nach Anspruch 6, dadurch gekennzeichnet, daß die Gleichrichtermittel (D3, D6, D7, R5) einen Funktionsverstärker (D3) einschließen, der als Präzisionsgleichrichter ausgebildet ist, wobei der Funktionsverstärker (D3) erste und zweite Eingänge aufweist, wobei der erste Eingang auf einem festen Potential gehalten ist und der zweite Eingang zum Summieren der ersten und zweiten Signale verbunden ist.

8.  Schalterstromkreis nach Anspruch 6 oder 7, dadurch gekennzeichnet, daß die Steuermittel (D3, D4, R4, C4) einen Komparator (D4) aufweisen, welcher den Schalter (R) des Empfangskanals aktiviert und den Schalter (S) des Sendekanals in Antwort auf ein Steuersignal (Vc) mit einer größeren Größe als der vorbestimmte Referenzwert (Vref) schließt.

9.  Telefoneinrichtung mit einem, Mikrophon (MIC), einem Lautsprecher (L/S) und einem Schalterstromkreis zur Verbindung des Mikrophons und des Lautsprechers mit einer Übertragungslinie, dadurch gekennzeichnet, daß der Schalterstromkreis wie in den vorangehenden Ansprüchen ausgebildet ist.

FIGURE 1

FIGURE 2